# EUROPEAN PATENT APPLICATION

(11) **EP 1 988 368 A1**
(43) Date of publication of application: **05.11.2008**
(21) Application number: 08007459.4
(22) Date of filing: 16.04.2008
(51) Int. Cl.: G01D 5/249

(54) **Absolute angle detecting device**

(30) Priority: 02.05.2007 JP 2007121822
(71) Applicant: Alps Electric Co., Ltd., Tokyo 145-8501 (JP)
(72) Inventor: Sano, Tadashi, Tokyo 145-8501 (JP)
(74) Representative: Klunker . Schmitt-Nilson . Hirsch

(57) **Abstract**

Disclosed is an absolute angle detecting device that requires an angle corresponding to one step of a cyclic gray code in order to perform initialization and to determine the errors of a detecting element.

An embodiment of the present disclosure provides an absolute angle detecting device for detecting the absolute angle of a rotating body. The absolute angle detecting device includes: a storage unit that stores an N-bit cyclic gray code, which is a combination of binary digits '1' and ' 0' ; N detecting elements that are arranged along a code pattern; and a data determining unit that compares an N-bit code string output from the N detecting elements with the N-bit cyclic gray code. In the cyclic gray code, when N is an even number, the number of 1s included in the code string in each step is N/2 or (N+2)/2 . When N is an odd number, the number of 1s included in the code string in each step is any one of (N+1)/2, (N-1)/2, (N+1)/2, and (N+3)/2.

## Description

This application claims priority to the Japanese Patent Application No. 2007-121822, filed May 2, 2007, the entirety of which is hereby incorporated by reference.

### BACKGROUND

### 1. Technical Field

The present disclosure relates to an absolute angle detecting device that detects the absolute angle of a rotating body using a cyclic gray code.

### 2. Related Art

In recent years, the following technique has been proposed: an absolute angle detecting device is provided between a steering shaft and a body of a vehicle; and the damping force of a suspension, the shift position of an automatic transmission, and the driving of rear wheels of a four-wheel steering vehicle are controlled on the basis of the steering angle, steering speed, and steering direction of a steering wheel detected by the absolute angle detecting device.

The inventor has proposed this type of absolute angle detecting device using a cyclic gray code (for example, Japanese Unexamined Patent Application Publication No. 2005-62177).

In the cyclic gray code, a code string varies by one bit between adjacent steps in one sector, and the difference between the first code string and the last code string in one section is one bit. In addition, the code strings are arranged such that the same code string does not appear in one sector. According to the technique disclosed in U.S.Patent No. 6,966,118 (corresponding to JP-A-2005-62177), it is possible to achieve an absolute angle detecting device having a resolution of 1.5 degrees or less, which is a common measure of 360 degrees.

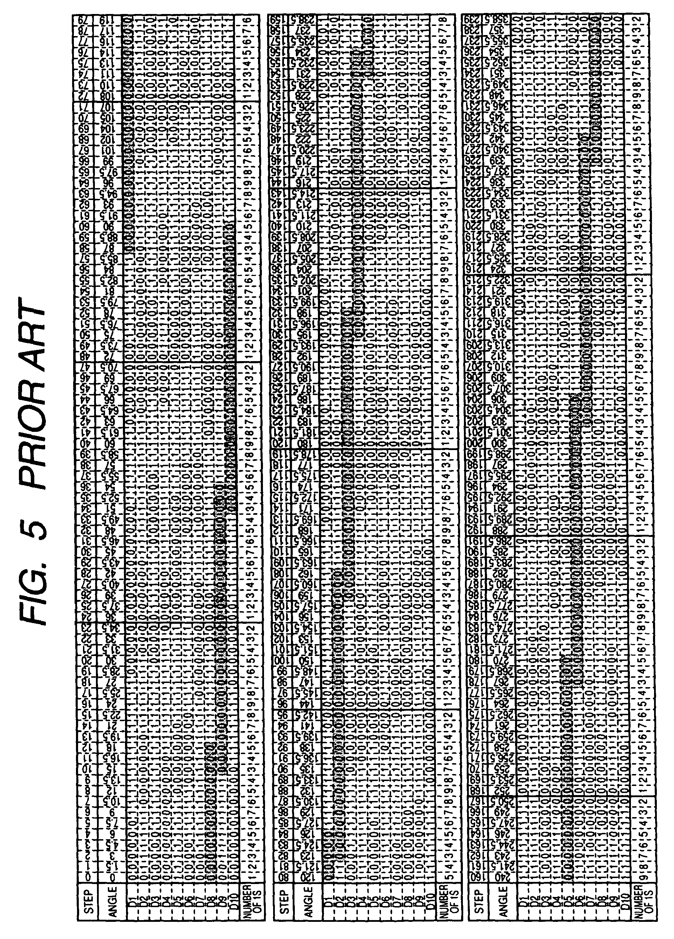

Fig. 5 is a diagram illustrating an example of a 10-bit cyclic gray code, in which one section is 360 degrees, the resolution is 1.5 degrees, and the number of steps is 240. As can be seen from a field 'number of 1s' in Fig. 5, in the cyclic gray code according to the related art, the number of 1s in each step varies in a range of 1 to 9. When the number of 1s in each step varies in a range of 1 to 9, it is easy to select the code string assigned to each step. As a result, it is easy to design a high-resolution absolute angle detecting device.

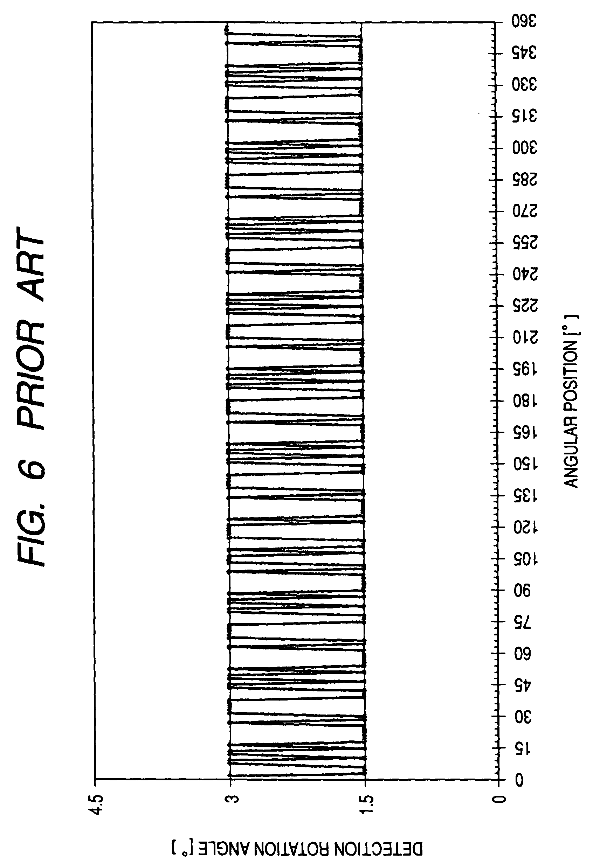

However, according to this structure, when one of 10 detecting elements that detect a 10-bit cyclic gray code is out of order, during the initialization of the absolute angle detecting device and after the initialization, the rotation angle of a rotating body required to detect the error of the absolute angle detecting device is 3 degrees corresponding to a maximum of two steps, as shown in Fig. 6. Fig. 6 is a graph illustrating a maximum rotation angle required to determine errors at each angular position (step) when one of the detecting elements of the absolute angle detecting device according to the related art is out of order.

Fig. 6 will be described in more detail below. In the 10-bit cyclic gray code shown in Fig. 5, a code string (0000100000) is set in the zeroth step. However, when a detecting element that outputs a signal D8 is out of order and outputs a signal '1' all the time, a code string (0000100100) is detected from the zeroth step. The code string (0000100100) is identical with a code string of a seventy-third step. In this state, when the rotating body is rotated 1.5 degrees to detect the code string of the first step, a value of 1 is output from the detecting element that outputs the signal D8 since the detecting element is out of order. Therefore, the code string of the first step detected by 10 detecting elements is (0100100100). This code string is identical with the code string of a seventy-fourth step. In this state, when the rotating body is further rotated 1.5 degrees to detect the code string of the second step, a value of 1 is output from the detecting element that outputs the signal D8 since the detecting element is out of order. Therefore, the code string of the second step detected by 10 detecting elements is (0100100110). Since this code string is different from a code string (0100100101) of a seventy-fifth step, the absolute angle detecting device can recognize first that the detecting element outputting the signal D8 is out of order in this stage. When only one of the detecting elements other than the detecting element outputting the signal D8 is out of order, similarly, the absolute angle detecting device can recognize that the detecting element is out of order immediately or after rotating the rotating body 1. 5 degrees or 3 degrees, from the arrangement of the code strings in the steps forming the cyclic gray code. Therefore, in the zeroth step, when the absolute angle detecting device is turned on to be initialized, the rotating body should be rotated a maximum of 3 degrees to detect the error of the absolute angle detecting device. In addition, after initialization, the rotating body should be rotated a maximum of 3 degrees to detect the error of the absolute angle detecting device.

In the case in which a detecting element that outputs a signal D5 when detecting the code string of the first step is out of order and outputs a signal '0' all the time, from the relationship between the code string of the first step and the code strings of the 167-th to 170-th steps, when the absolute angle detecting device is turned on to be initialized, the rotating body should be rotated a maximum of 3 degrees to detect the error of the absolute angle detecting device. In addition, after the initialization, the rotating body should be rotated a maximum of 3 degrees to detect the error of the absolute angle detecting device. When only one of the detecting elements other than the detecting element outputting the signal D5 is out of order, similarly, the absolute angle detecting device can recognize that the detecting element is out of order immediately or after rotating the rotating body 1.5 degrees or 3 degrees, from the arrangement of the code strings in the steps forming the cyclic gray code. Therefore, in the first step, when the absolute angle detecting device is turned on to be initialized, the rotating body should be rotated a maximum of 3 degrees to detect the error of the absolute angle detecting device. In addition, after the initialization, the rotating body should be rotated a maximum of 3 degrees to detect the error of the absolute angle detecting device.

For the second step, when the detecting element that outputs the signal D5 is out of order and outputs a signal '0' all the time, when a detecting element that outputs a signal D7 is out of order and outputs a signal '1' all the time, and when a detecting element that outputs a signal D9 is out of order and outputs a signal '0' all the time, the code string is identical with the code string of a 169-th step, the code string of the third step, and the code string of the first step. However, the code string when the rotating body is rotated from the second step to the third step is not a regular code string. Therefore, in this stage, it is possible to determine whether the detecting elements outputting the signals D5, D7, and D9 are out of order. When the detecting elements outputting signals D1, D2, D3, D4, D6, D8, and D10 are out of order, the code string detected from the second step is not set in the code string table. Therefore, the absolute angle detecting device can immediately recognize that the detecting elements are out of order. Thus, in the second step, the maximum rotation angle of the rotating body required to initialize the absolute angle detecting device and to determine the failure of the detecting element is 1.5 degrees. Fig. 6 shows the simulation results.

In the absolute angle detecting device according to the related art, when the absolute angle detecting device is initialized, and after the initialization, the rotating body should be rotated a maximum of 3 degrees corresponding to two steps to detect the failure of the detecting element. However, in order to improve the reliability and convenience of the absolute angle detecting device, it is necessary to further reduce the angle required to determine the failure of the detecting element.

### SUMMARY

An advantage of some aspects of the present disclosure is to provide an absolute angle detecting device that uses an angle corresponding to one step of a cyclic gray code to determine the failure of a detecting element.

According to an aspect of the invention, there is provided an absolute angle detecting device for detecting the absolute angle of a rotating body. The absolute angle detecting device includes: a storage unit that stores an N-bit cyclic gray code, which is a combination of binary digits '1' and '0'; N detecting elements that are arranged along a code pattern; and a data determining unit that compares an N-bit code string output from the N detecting elements with the N-bit cyclic gray code. In the cyclic gray code, when N is an even number, the number of 1s included in the code string in each step is N/2 or (N+2)/2. When N is an odd number, the number of 1s included in the code string in each step is any one of (N+1) /2, (N-1) /2, (N+1) /2, and (N+3)/2.

According to the above-mentioned structure, it is possible to determine the error of a code string, that is, the failure of a detecting element, on the basis of the number of 1s included in each of the code strings of the steps forming a cyclic gray code as well as the arrangement of the code string of each step. Therefore, it is possible to use an angle corresponding to one step of the cyclic gray code to initialize an absolute angle detecting device and to determine whether a detecting element is out of order.

In the absolute angle detecting device according to the above-mentioned aspect, preferably, N is equal to or greater than 7.

When the number of bits (N) of the code string is smaller than 7, the number of codes used in the cyclic gray code, that is, the number of different code strings is considerably smaller than that when the number of bits (N) is 8. As a result, a smaller angle is assigned to one sector, which makes it difficult to improve the detection accuracy of the absolute angle. For example, when the number of bits (N) of the code string is 6, a total of 24 cyclic code strings have three or four 1s. When the resolution is 1.5 degrees, 36 degrees are assigned to one sector (1.5 degrees x 24), that is, a small angle is assigned to one sector. In this case, the detection accuracy of the sector is remarkably lowered to due mechanical backlash, as compared to when a large angle is assigned to one sector (when the number of bits (N) is 8), and thus it is difficult to improve the detection accuracy of the absolute angle. For this reason, it is preferable that the number of bits (N) of the code string be equal to or greater than 7.

In the absolute angle detecting device according to the above-described aspect, in a N-bit cyclic gray code composed of a combination of binary numbers 1' and '0' , when N is an even number, the number of 1s included in the code string of each step is N/2 or (N+2) /2 . When N is an odd number, the number of 1s included in the code string of each step is any one of (N+1) /2, (N-1) /2, (N+1) /2, or (N+3)/2. According to this structure, it is possible to determine the error of the code string on the basis of the arrangement of the code strings of the steps forming the cyclic gray code as well as the number of 1s included in the code string of each step. Therefore, it is possible to initialize the absolute angle detecting device and to determine whether a detecting element is out of order, using an angle corresponding to one step of the cyclic gray code.

### BRIEF DESCRIPTION OF THE DRAWINGS

Fig. 1 is a plan view illustrating the structure of a rotary disk provided in an absolute angle detecting device according to an embodiment of the present disclosure and the arrangement of a group of detecting elements that detect code strings from the rotary disk;
Fig. 2 is a diagram illustrating the structure of a control unit provided in the absolute angle detecting device according to the embodiment;
Fig. 3 is a diagram illustrating a cyclic gray code string table applied to the absolute angle detecting device according to the embodiment;
Fig. 4 is a graph illustrating a maximum rotation angle required to determine errors at each angular position (step) when one of the detecting elements of the absolute angle detecting device according to the embodiment is out of order;
Fig. 5 is a diagram illustrating a cyclic gray code string table applied to an absolute angle detecting device according to the related art; and
Fig. 6 is a graph illustrating a maximum rotation angle required to determine errors at each angular position (step) when one of the detecting elements of the absolute angle detecting device according to the related art is out of order.

### DESCRIPTION OF EXEMPLARY EMBODIMENTS

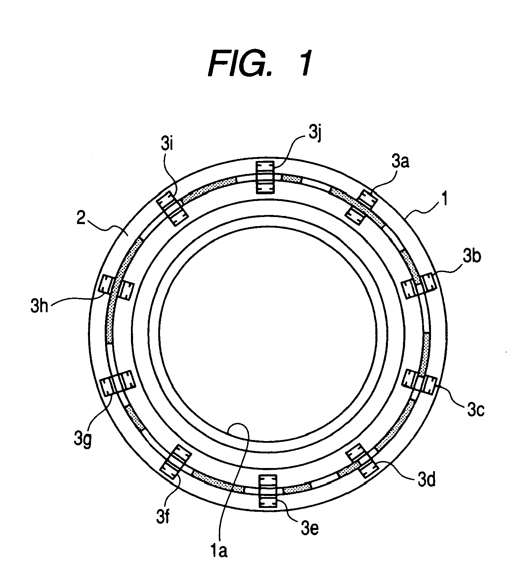

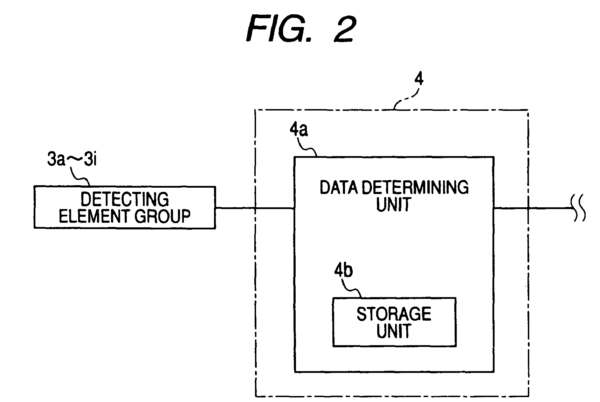

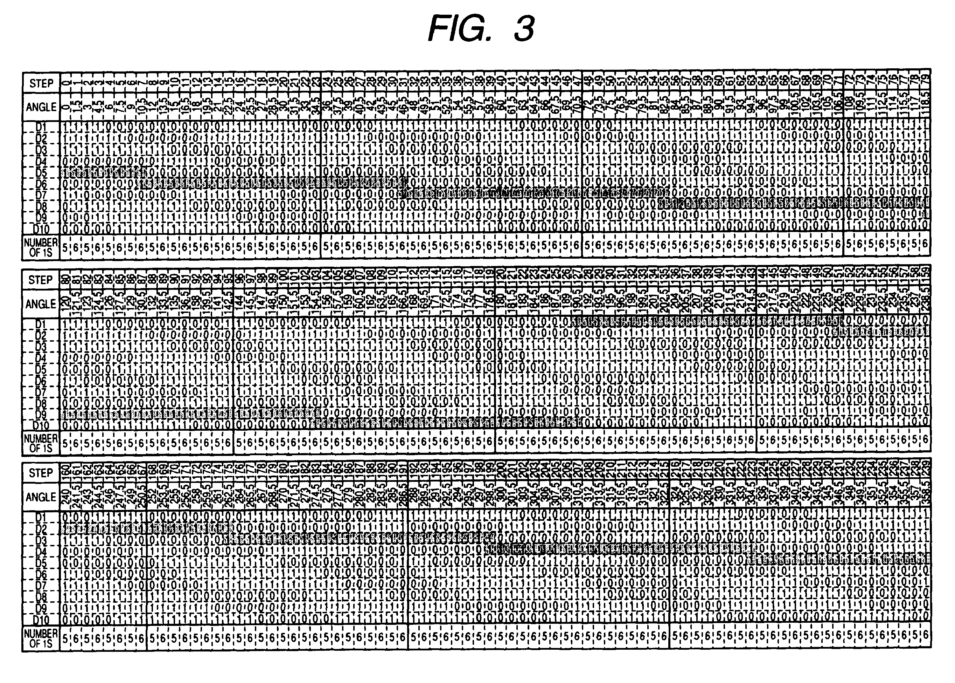

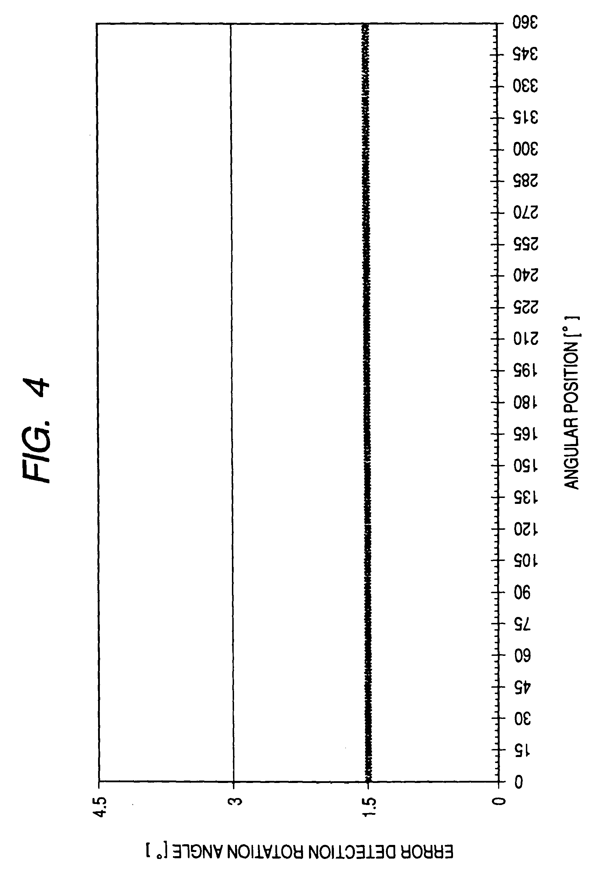

Hereinafter, an absolute angle detecting device according to an embodiment of the present disclosure will be described with reference to Figs. 1 to 4. Fig. 1 is a plan view illustrating the structure of a rotary disk provided in the absolute angle detecting device according to this embodiment and the arrangement of a group of detecting elements that detect a code string from the rotary disk. Fig. 2 is a diagram illustrating the structure of a control unit provided in the absolute angle detecting device according to this embodiment. Fig. 3 is a diagram illustrating a cyclic gray code string table applied to the absolute angle detecting device according to this embodiment. Fig. 4 is a graph illustrating a maximum rotation angle required to determine an error at each angular position when one of the detecting elements of the absolute angle detecting device according to this embodiment is out of order.

As shown in Fig. 1, the absolute angle detecting device according to this embodiment includes, as main components, a rotary disk 1 that is mounted to a rotating body (not shown), such as a steering shaft, and integrally rotates with the rotating body, a code pattern string 2 that is formed on the rotary disk, first to tenth detecting elements 3a to 3j that are arranged opposite to the code pattern string 2, and a signal processing unit 4 that generates a 10-bit code string from the output signals from the first to tenth detecting elements 3a to 3j and calculates the absolute angle of the rotary disk 1 (rotating body) from the generated code string.

An opening 1a into which a rotating body, such as a steering shaft, is inserted is provided at the center of the rotary disk 1, and the code pattern string 2 formed of a light shielding plate is coaxially provided with the opening 1a on one surface of the rotary disk 2.

Photo interrupters, which are assemblies of light emitting elements and light receiving elements, are used as the detecting elements 3a to 3j. In each of the detecting elements 3a to 3j, the light emitting element and the light receiving element are arranged with the code pattern string 2 interposed therebetween. In this embodiment, 10 detecting elements 3a to 3j are arranged along one code pattern string 2 at equal distances. In this case, it is preferable to position the detecting elements 3a to 3j using one holder, in order to reduce the positional error between the detecting elements.

As shown in Fig. 2, the signal processing unit 4 includes a data determining unit 4a having a storage unit 4b provided therein. The data determining unit 4a receives a 10-bit code string output from the detecting elements 3a to 3j, and determines whether 2 code strings are continuously input in the order of the code strings (the code string table shown in Fig. 3) that have been stored in the storage unit 4b. When it is determined that the code strings are input in the predetermined order, the data determining unit 4a outputs an angular signal corresponding to a newly input code string. On the other hand, when it is determined that the code strings are not input in the predetermined order, the data determining unit 4a outputs a signal corresponding to an error signal at the that time. In this way, the data determining unit 4a starts its operation when angular signals are continuously input from the detecting elements 3a to 3j. For example, the data determining unit 4a cannot output signals corresponding to angular signals or error signals when the 10-bit code string output from the detecting elements 3a to 3j is input at first, that is, the 10-bit code string is not continuously input, such as during start-up.

Next, the code string table shown in Fig. 3 will be described. As shown in Fig. 3, in a cyclic gray code according to this embodiment, 360 degrees are divided into 240 steps, that is, the resolution is 1.5 degrees, and each step is composed of a 10-bit code string. As can be seen from a field 'number of 1s' in Fig. 3, the number of 1s included in each code string is limited to only 5' or '6'. The number '5' or '6' corresponds to 10/2 or (10+2)/2 (where '10' is the number of bits of each code string), respectively. That is, when the number of bits of the code string is N, the number '5' or '6' corresponds to N/2 or (N+2)/2, respectively. In addition, since the cyclic gray code is used, the code string varies by one bit between adjacent steps, and the code string also varies by one bit between a zeroth step and a 239-th step. Further, the code strings of the steps are set such that the same code string does not appear within 360 degrees.

In the cyclic gray codes that are configured as described above, in the zeroth step in which the number of 1s in the code string is '5', when the detecting element 3a that outputs a signal D1 is out of order and outputs a signal '0' all the time, when the detecting element 3b that outputs a signal D2 is out of order and outputs a signal '0' all the time, when the detecting element 3c that outputs a signal D3 is out of order and outputs a signal '0' all the time, when the detecting element 3e that outputs a signal D5 is out of order and outputs a signal '0' all the time, and when the detecting element 3g that outputs a signal D7 is out of order and outputs a signal '0' all the time, the number of 1s included in the code string that is detected in the zeroth step is '4'. Therefore, the data determining unit 4b can immediately determine that the detecting elements 3a, 3b, 3c, 3e, and 3g are out of order, and the signal processing unit 4 can output signals corresponding to error signals.

When the detecting element 3d that outputs a signal D4 is out of order and outputs a signal 1' all the time, the code string detected in the zeroth step is identical with a code string (1111101000) of the 239-th step. Therefore, the data determining unit 4b cannot immediately determine that the detecting element is out of order. However, when the rotary disk 1 is rotated 1.5 degrees, a code string (1111101100) is detected from the first step, which is different from a code string (1110101000) of a step (zeroth step) subsequent to the 239-th step. Therefore, in this stage, the data determining unit 4b can determine that the detecting element 3d is out of order, and the signal processing unit 4 can output signals corresponding to error signals. That is, when the absolute angle detecting device is initialized, and after the absolute angle detecting device is initialized, the rotation angle of the rotary disk 1 required to detect the error of the absolute angle detecting device is 1.5 degrees corresponding to one step.

When the detecting element 3f that outputs a signal D6 is out of order and outputs a signal '1' all the time, the code string detected from the zeroth step is identical with a code string (1110111000) of the nineteenth step. Therefore, the data determining unit 4b cannot immediately determine that the detecting element is out of order. However, when the rotary disk 1 is rotated 1.5 degrees, a code string (1110111100) is detected from the first step, which is different from a code string (1110110000) of a step (twentieth step) subsequent to the nineteenth step. Therefore, in this stage, the data determining unit 4b can determine that the detecting element 3f is out of order, and the signal processing unit 4 can output signals corresponding to error signals. That is, when the absolute angle detecting device is initialized, and after the absolute angle detecting device is initialized, the rotation angle of the rotary disk 1 required to detect the error of the absolute angle detecting device is 1.5 degrees corresponding to one step.

When the detecting element 3h that outputs a signal D8 is out of order and outputs a signal '1' all the time, the code string detected from the zeroth step is identical with a code string (1110101100) of the first step. Therefore, the data determining unit 4b cannot immediately determine that the detecting element is out of order. However, when the rotary disk 1 is rotated 1.5 degrees, a code string (1110101100) is detected from the first step, which is different from a code string (1110100100) of a step (second step) subsequent to the first step. Therefore, in this stage, the data determining unit 4b can determine that the detecting element 3h is out of order, and the signal processing unit 4 can output signals corresponding to error signals. That is, when the absolute angle detecting device is initialized, and after the absolute angle detecting device is initialized, the rotation angle of the rotary disk 1 required to detect the error of the absolute angle detecting device is 1.5 degrees corresponding to one step.

When the detecting element 3i that outputs a signal D9 is out of order and outputs a signal '1' all the time, a code string (1110101010) is detected from the zeroth step, and there is no step having the same code string as above in the code string table. Therefore, the data determining unit 4b can immediately determine that the detecting element 3i is out of order, and the signal processing unit 4 can output signals corresponding to error signals.

When the detecting element 3j that outputs a signal D10 is out of order and outputs a signal '1' all the time, a code string (1110101001) is detected from the zeroth step, and there is no step having the same code string as above in the code string table. Therefore, the data determining unit 4b can immediately determine that the detecting element 3j is out of order, and the signal processing unit 4 can output signals corresponding to error signals.

In the first step in which the number of 1s in the code string is '6', when the detecting element 3d that outputs the signal D4 is out of order and outputs a signal '1' all the time, when the detecting element 3f that outputs the signal D6 is out of order and outputs a signal '1' all the time, when the detecting element 3i that outputs the signal D9 is out of order and outputs a signal '1' all the time, and when the detecting element 3j that outputs the signal D10 is out of order and outputs a signal '1' all the time, the number of 1s included in the code string that is detected from the first step is '7'. Therefore, the data determining unit 4b can immediately determine that the detecting elements 3d, 3f, 3i, and 3j are out of order, and the signal processing unit 4 can output signals corresponding to error signals.

When the detecting element 3a that outputs the signal D1 is out of order and outputs a signal '0' all the time, a code string (0110101100) is detected from the first step, and there is no step having the same code string as above in the code string table. Therefore, the data determining unit 4b can immediately determine that the detecting element 3a is out of order, and the signal processing unit 4 can output signals corresponding to error signals.

When the detecting element 3b that outputs the signal D2 is out of order and outputs a signal '0' all the time, a code string (1010101100) is detected from the first step, and there is no step having the same code string as above in the code string table. Therefore, the data determining unit 4b can immediately determine that the detecting element 3b is out of order, and the signal processing unit 4 can output signals corresponding to error signals.

When the detecting element 3c that outputs the signal D3 is out of order and outputs a signal '0' all the time, a code string (1100101100) is detected from the first step, and there is no step having the same code string as above in the code string table. Therefore, the data determining unit 4b can immediately determine that the detecting element 3c is out of order, and the signal processing unit 4 can output signals corresponding to error signals.

When the detecting element 3e that outputs the signal D5 is out of order and outputs a signal '0' all the time, the code string detected from the first step is identical with a code string (1110001100) of the fortieth step. Therefore, the data determining unit 4b cannot immediately determine that the detecting element is out of order. However, when the rotary disk 1 is rotated 1.5 degrees, a code string (1110000100) is detected from the second step, which is different from a code string (1111001100) of a step (forty-first step) subsequent to the fortieth step. Therefore, in this stage, the data determining unit 4b can determine that the detecting element 3e is out of order, and the signal processing unit 4 can output signals corresponding to error signals. That is, when the absolute angle detecting device is initialized, and after the absolute angle detecting device is initialized, the rotation angle of the rotary disk 1 required to detect the error of the absolute angle detecting device is 1.5 degrees corresponding to one step.

When the detecting element 3g that outputs a signal D7 is out of order and outputs a signal '0' all the time, the code string detected from the first step is identical with a code string (1110100100) of the second step. Therefore, the data determining unit 4b cannot immediately determine that the detecting element is out of order. However, when the rotary disk 1 is rotated 1.5 degrees, a code string (1110100100) is detected from the second step, which is different from a code string (1110100110) of a step (third step) subsequent to the second step. Therefore, in this stage, the data determining unit 4b can determine that the detecting element 3g is out of order, and the signal processing unit 4 can output signals corresponding to error signals. That is, when the absolute angle detecting device is initialized, and after the absolute angle detecting device is initialized, the rotation angle of the rotary disk 1 required to detect the error of the absolute angle detecting device is 1.5 degrees corresponding to one step.

When the detecting element 3h that outputs the signal D8 is out of order and outputs a signal '0' all the time, the code string detected from the first step is identical with a code string (1110101000) of the zeroth step. Therefore, the data determining unit 4b cannot immediately determine that the detecting element is out of order. However, when the rotary disk 1 is rotated 1.5 degrees, a code string (1110100000) is detected from the second step, which is different from a code string (1110101100) of a step (first step) subsequent to the zeroth step. Therefore, in this stage, the data determining unit 4b can determine that the detecting element 3h is out of order, and the signal processing unit 4 can output signals corresponding to error signals. That is, when the absolute angle detecting device is initialized, and after the absolute angle detecting device is initialized, the rotation angle of the rotary disk 1 required to detect the error of the absolute angle detecting device is 1.5 degrees corresponding to one step.

In this way, in the cyclic gray code used in the absolute angle detecting device according to this embodiment, even in the step in which the number of 1s in the code string is '5' and in the step in which the number of 1s is '6', when the absolute angle detecting device is initialized, and after the absolute angle detecting device is initialized, the rotation angle of the rotary disk 1 required to detect the error of the absolute angle detecting device is 1.5 degrees corresponding to one step. Fig. 4 shows the maximum rotation angle of the rotary disk 1 for each step that is required to detect the error of the absolute angle detecting device when the absolute angle detecting device is initialized for all the 240 steps, and after the absolute angle detecting device is initialized. As can be seen from Fig. 4, when the absolute angle detecting device according to this embodiment is initialized and after it is initialized, it is necessary to rotate the rotary disk 1 by an angle corresponding to one step in order to detect the error of the absolute angle detecting device. Therefore, it is possible to further improve the reliability and convenience of an absolute angle detecting device, as compared to the absolute angle detecting device according to the related art.

Further, in this embodiment, the cyclic gray code is composed of an even-numbered-bit (10-bit) code string, but the invention is not limited thereto. For example, the cyclic gray code may be composed of an odd-numbered-bit code string. In this case, when the number of bits of the code string is N, the number of 1s included in a code string in each step is any one of (N+1) /2, (N-1) /2, (N+1) /2, and (N+3)/2. Therefore, it is possible to obtain the same effects as those in the absolute angle detecting device according to the above-described embodiment.

Furthermore, in this embodiment, the cyclic gray code is composed of a 10-bit code string, but the number of bits of the code string is not limited thereto. The number of bits of the code string may appropriately increase or decrease according to performances required, for example, the angle of one sector or resolution. However, when the number of bits of the code string is smaller than 7, it is difficult to form a high-resolution cyclic gray code, which makes it difficult to reduce the size and manufacturing costs of an absolute angle detecting device. Therefore, it is preferable that the number of bits of the code string be equal to or greater than 7.

## Claims

1. An absolute angle detecting device for detecting the absolute angle of a rotating body, the absolute angle detecting device comprising:
a storage unit that stores an N-bit cyclic gray code, which is a combination of binary digits '1' and '0';
N detecting elements that are arranged along a code pattern; and
a data determining unit that compares an N-bit code string output from the N detecting elements with the N-bit cyclic gray code,
wherein, in the cyclic gray code, when N is an even number, the number of '1's included in the code string in each step is N/2 or (N+2)/2, and
when N is an odd number, the number of '1' s included in the code string in each step is any one of (N+1)/2, (N-1)/2, (N+1) /2, and (N+3)/2.

2. The absolute angle detecting device according to claim 1,
wherein N is equal to or greater than 7.
